(19) Europäisches Patentamt
European Patent Office
Office européen des brevets

(11) EP 1 199 341 B1

# (12) EUROPÄISCHE PATENTSCHRIFT

(45) Veröffentlichungstag und Bekanntmachung des Hinweises auf die Patenterteilung:
**20.04.2005 Patentblatt 2005/16**

(51) Int Cl.$^7$: **C09D 133/06**, C09D 133/10, C08F 220/18

(21) Anmeldenummer: **01123990.2**

(22) Anmeldetag: **08.10.2001**

(54) **Pigmenthaltige Beschichtungsmittel auf Wasserbasis**

Waterbased pigment containing coating composition

Composition aqueuse de revêtement pigmenté

(84) Benannte Vertragsstaaten:
**DE ES FR IT NL**

(30) Priorität: **09.10.2000 DE 10049791**

(43) Veröffentlichungstag der Anmeldung:
**24.04.2002 Patentblatt 2002/17**

(73) Patentinhaber: **BASF AKTIENGESELLSCHAFT**
**67056 Ludwigshafen (DE)**

(72) Erfinder:
- **Lach, Christian**
  **67098 Bad Dürkheim (DE)**
- **Baumstark, Roland**
  **67434 Neustadt (DE)**

(74) Vertreter: **Kinzebach, Werner, Dr. et al**
**Patentanwälte,**
**Reitstötter, Kinzebach & Partner,**
**Ludwigsplatz 4**
**67059 Ludwigshafen (DE)**

(56) Entgegenhaltungen:
**DE-A- 19 811 314**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 199 341 B1

Printed by Jouve, 75001 PARIS (FR)

## Beschreibung

Die vorliegende Erfindung betrifft pigmenthaltige Beschichtungsmittel auf Wasserbasis, die wenigstens eine wässrige Dispersion eines filmbildenden Polymeren P als Bindemittel enthalten und die im Wesentlichen frei sind von organischen, wasserunlöslichen Löse- und Filmbildehilfsmitteln.

Unter pigmenthaltigen Beschichtungsmitteln versteht man hier und im Folgenden insbesondere Anstrichfarben und kunstharzgebundene Putze. Pigmenthaltige, wässrige Beschichtungsmittel enthalten als Bindemittel für die Pigmentteilchen und die gegebenenfalls anwesenden Füllstoffe in der Regel ein filmbildendes Polymer in Form einer wässrigen Polymerdispersion. Die in der Polymerdispersion enthaltenen Polymerteilchen bilden beim Trocknen der Beschichtung einen Polymerfilm, der die Pigmentteilchen und die Füllstoffe bindet. Die Ausbildung eines gleichmäßigen Polymerfilms ist nur dann gewährleistet, wenn das Beschichtungsmittel bei Temperaturen oberhalb der Mindestfilmbildetemperatur (MFT = Temperatur oberhalb der das Polymer in dem Beschichtungsmittel einen Polymerfilm bildet) verarbeitet wird. Eine gleichmäßige Verfilmung ist jedoch für die mechanische Stabilität der Beschichtung wichtig. Konventionelle Beschichtungsmittel enthalten daher in der Regel Filmbildehilfsmittel, das die Filmbildungstemperatur des Polymeren herabsetzt. Bei den Filmbildehilfsmitteln (Koaleszenzmitteln) handelt es sich in der Regel um flüchtige organische Verbindungen, beispielsweise um Lösungsmittel wie Kohlenwasserstoffe, Glykole und Glykolether oder Weichmacher z.B. Dialkylester von Dicarbonsäuren, die beim Trocknen der Beschichtung zunächst die Polymerisatteilchen plastifizieren (temporäre Plastifizierung) und so die Filmbildung erleichtern. Beim weiteren Trocknen werden die Filmbildehilfsmittel an die Umgebung abgegeben, wodurch sich die Oberflächenhärte des Polymerfilms erhöht und seine Klebrigkeit erniedrigt. Die Abgabe derartiger flüchtiger Substanzen, die üblicherweise auch als VOC (= Volatile Organic Compounds) bezeichnet werden, an die Umgebung ist nicht erwünscht, so daß Filmbildehilfsmittel und andere flüchtige Bestandteile in pigmenthaltigen, wässrigen Beschichtungsmitteln vermieden werden sollten.

Bindemittel, die bereits ohne Koaleszenzmittel eine ausreichend niedrige MFT aufweisen, führen häufig zu Beschichtungen mit geringer mechanischer Festigkeit aufgrund geringerer Kohäsion des Polymerfilms. Zudem weisen solche Beschichtungen eine verstärkte Ansschmutzneigung auf .

Problematisch ist außerdem die Witterungsstabilität von Beschichtungen, die aus lösungsmittelarmen Beschichtungsmitteln auf Wasserbasis erhalten werden. Starke Temperaturschwankungen sowie Feuchtigkeitseinwirkung können Rißbildungen und Enthaftung der Beschichtung (z. B. Blasenbildung) zur Folge haben. Problematisch ist insbesondere die Einwirkung von Wasser und Frost, d. h. Frosteinwirkung in einer feuchten Atmosphäre. Bei Beschichtungen auf Basis konventioneller, lösungsmittelarmer Beschichtungsmittel tritt dann häufig ein Delaminieren der Beschichtung auf, das sich durch Blasenbildung, Rißbildung und im Extremfall durch ein Abblättern der Beschichtung äußert.

Aus der US-5,530,056 und der US-5,610,225 sind Bindemittel für lösungsmittelfreie, wässrige Beschichtungsmittel bekannt, die spezielle Ester der Acrylsäure oder der Methacrylsäure mit Polyethylenglykolen (PEG-Monomere) einpolymerisiert enthalten. PEG-Monomere sind vergleichsweise teuer und in ihrer Wirkung nicht immer zufriedenstellend.

Die EP-A 810 274 beschreibt die Verwendung von Copolymerisaten vinylaromatischer Monomere mit Alkylacrylaten als Bindemittel in pigment- oder füllstoffhaltigen Beschichtungsmassen. Beschichtungen auf Basis der dort beschriebenen Bindemittel weisen insbesondere dann eine hohe Naßabriebfestigkeit auf, wenn das Bindemittelpolymer weniger als 1 Gew.-% saure Monomere einpolymerisiert enthält. Die so erhaltenen Beschichtungen weisen nur eine durchschnittliche Bewitterungsstabilität und Ansschmutzneigung auf, insbesondere bei längerer Belastung mit UV-Strahlung.

Die DE 198 11 314 beschreibt Beschichtungsmittel, die zur Verbesserung der Naßabriebfestigkeit ein Bindemittelpolymer enthalten, das 0,1 bis 1,5 Gew.-% Itakonsäure in einpolymerisierter Form aufweist.

In der EP-A-599 676 werden als Bindemittel für Latexfarben wässrige Polymerdispersionen beschrieben, die polymerisierbare Derivate des Benzophenons einpolymerisiert enthalten. Der Einsatz derartiger Spezialmonomere erhöht ebenfalls die Kosten für das Bindemittel in beträchtlichem Maße.

Die deutsche Patentanmeldung P 199 18 052.0 beschreibt Beschichtungsmittel auf Wasserbasis, die im Wesentlichen lösungsmittelfrei sind. Die Beschichtungsmittel enthalten zur Verringerung ihrer Anschmutzneigung 0,05 bis < 0,3 Gew.-% Photoinitiatoren.

Die ältere Deutsche Patentanmeldung P 19939327.3 beschreibt Bindemittelpolymere auf Basis von Styrol/(Meth)acrylester-Polymerisaten, die 2 bis 4 Gew.-% Methacrylsäure einpolymerisiert enthalten, und deren Verwendung als Bindemittel in Dispersionsfarben, d. h. Anstrichmitteln auf Wasserbasis.

Der vorliegenden Erfindung liegt die Aufgabe zugrunde, Beschichtungsmittel bereit zu stellen, die im Wesentlichen lösungsmittelfrei sind und eine mechanisch stabile Beschichtung liefern, die außerdem gegenüber Witterungsbedingungen wie UV-Strahlung und Frosteinwirkung stabil sind.

Diese Aufgabe wird gelöst, durch Beschichtungsmittel, die als Bindemittel eine wässrige Polymerdispersion eines Polyacrylats enthalten, das 0,1 bis 10 Gew.-% die nachstehend definierten polaren Hilfsmonomere B bis E einpolymerisiert enthält, wobei der Anteil ethylenisch ungesättigter Monocarbonsäuren weniger als 1 Gew.-% der Gesamtmonomermenge ausmacht.

Die vorliegende Erfindung betrifft somit ein pigmenthaltiges Beschichtungsmittel auf Wasserbasis, das im Wesentlichgen frei ist von flüchtigen organischen Verbindungen, enthaltend

i) eine wässrige Bindemittelzubereitung als Komponente I mit einer Mindestfilmbildetemperatur MFT ≤ 5°C auf Basis einer wässrigen Polymerdispersion eines oder mehrerer Polymere P, die aufgebaut sind aus

90 bis 99,9 Gew.-% wenigstens zwei voneinander verschiedener Monomersorten A1 und A2, wobei das Monomer A1 ausgewählt ist unter den $C_2$-$C_{12}$-Alkylestern der Acrylsäure und das Monomer A2 ausgewählt ist unter den $C_1$-$C_{12}$-Alkylestern der Methacrylsäure;

0 bis 0,8 Gew.-% Monomeren B, ausgewählt unter monoethylenisch ungesättigten Monocarbonsäuren mit 3 bis 6 C-Atomen;

0 bis 2 Gew.-% Monomeren D, ausgewählt unter den Amiden monoethylenisch ungesättigter Monocarbonsäuren mit 3 bis 6 C-Atomen

0 bis 5 Gew.-% Monomeren E, ausgewählt unter den Hydroxy-$C_2$-$C_4$-alkylestern monoethylenisch ungesättigter Monocarbonsäuren mit 3 bis 6 C-Atomen (Monomere E1) und den Estern monoethylenisch ungesättigter Monocarbonsäuren mit 3 bis 6 C-Atomen mit Poly-$C_2$-$C_3$-alkylen-oxiden (Monomere E2) und Monomeren F, ausgewählt unter monoethylenisch ungesättigten Monomeren mit einer Harnstoffgruppe und monoethylenisch ungesättigten Monomeren mit einer Acetylacetoxy-Gruppe,

wobei alle Mengenanteile der Monomere auf die Gesamtmenge der Monomere A bis F bezogen sind; die Gesamtmenge der Monomere B und C weniger als 1 Gew.-% beträgt und die Gesamtmenge der Monomere B, C, D, E und F 0,1 bis 10 Gew.-%, vorzugsweise 0,2 bis 5 Gew.-% und insbesondere 0,3 bis 2 Gew.-% beträgt;

ii) wenigstens ein anorganisches, teilchenförmiges Pigment als Komponente II

iii)gegebenenfalls anorganische, teilchenförmige Füllstoffe als Komponente III, und

iv) die für Beschichtungsmittel typischen Hilfsmittel, wobei das Beschichtungsmittel weniger als 0,05 Gew.-%, bezogen auf das Polymer P, Photoinitiatoren enthält und durch eine Pigmentvolumenkonzentration PVK oberhalb 20 gekennzeichnet ist.

Der Gehalt an flüchtigen organischen Löse- und Filmbildehilfsmitteln liegt in den erfindungsgemäßen Beschichtungsmitteln in der Regel unterhalb 0,1 Gew.-%, insbesondere unterhalb 500 ppm und speziell nicht mehr als 300 ppm, bezogen auf das Gesamtgewicht des Beschichtungsmittels. Beispiele für organische Löse- und Filmbildehilfsmittel sind flüchtige Kohlenwasserstoffe wie Benzinfraktionen, Weißöle, flüssige Paraffine, Glykole wie Butylenglykol, Ethylenglykol, Diethylenglykol und Propylenglykol, Glykolether wie Glykolbutylether, Diethylenglykol-monobutylether, 1-Methoxy-2-propanol, Dipropylenglykolmethylether, Dipropylenglykolpropylether, Dipropylenglykol-n-buthylether, Tripropylenglykol-n-butylether, 2/3-Phenoxypropanol, Glykolester und -etherester wie Butylglykolacetat, Diethylenglykol-mono-n-butyletheracetat, 2,2,4-Trimethylpentan-1,3-diolmonoisobutyrat und vergleichbare, sowie organische Weichmacher (organische Flüssigkeiten mit einem Siedepunkt oberhalb 250°C), wie Dibutylphthalat, Dioctylphthalat, Tributoxyoctylphosphat, 2,2,4-Trimethylpentan-1,3-dioldiisobutyrat und Polypropylenglykolalkylphenylether (z. B. Plasti-lit® 3060) und - herstellungsbedingt - auch nicht polymerisierte Monomere (sogenannte Restmonomere). Typischerweise enthalten die erfindungsgemäßen Beschichtungsmittel als wasserunlösliche, organische Verbindungen ausschließlich herstellungsbedingte, flüchtige organische Verunreinigungen, wie Restmonomere und deren Umwandlungsprodukte, vorteilhafterweise in Mengen weniger als 1000 ppm und insbesondere weniger als 500 ppm, und bevorzugt nicht mehr als 300 ppm, bezogen auf das Gesamtgewicht des Beschichtungsmittels.

Die Pigmentvolumenkonzentration PVK ist definitionsgemäß der mit 100 multiplizierte Quotient aus dem Volumenanteil der Komponenten II+III und dem Gesamtvolumen der Komponenten I+II+III.

Die Mindestfilmbildetemperatur ist die Temperatur, unterhalb derer ein Bindemittel keinen gleichmäßigen, das heisst, rissfreien, Film mehr ausbildet. Die Temperaturen werden in Anlehnung an DIN 53787 bestimmt (s. Ullmanns Enzyklopädie der Technischen Chemie, 4. Aufl., Bd. 19, VCH Weinheim 1980, S. 17). Vorzugsweise liegt der MFT der in den erfindungsgemäßen Beschichtungsmitteln eingesetzten Bindemittel unterhalb 3°C und insbesondere unterhalb 0°C. Die Einstellung der MFT erfolgt in der Regel nicht durch Zugabe von Koaleszenzhilfsmitteln sondern durch Einsatz

eines Polymeren P mit einer geeigneten Glasübergangstemperatur Tg, da die MFT mit der Glasübergangstemperatur $T_G$ zusammenhängt. Üblicherweise liegt die Glasübergangstemperatur der Polymere P im Bereich von +10 bis -20°C und insbesondere im Bereich von +10 bis -10°C.

Der Begriff Glasübergangstemperatur meint in dieser Schrift die nach dem DSC-Verfahren (Differential Scanning Calorimetry, 20°C/min, midpoint) ermittelte Glasübergangstemperatur (vgl. ASTM D 3418-82).

Der Fachmann wird zur Einstellung der gewünschten $T_G$ bei der Herstellung des Polymeren P von einer geeigneten Monomermischung ausgehen. Nach Fox (T.G. Fox, Bull. Am. Phys. Soc. (Ser. II) 1, 123 [1956] und Ullmann's Enzyklopädie der technischen Chemie, 4. Auflage, Band 19, Verlag Chemie, Weinheim (1980), S. 17, 18) gilt nämlich für die Glasübergangstemperatur von Mischpolymerisaten bei großen Molmassen in guter Nährung

$$\frac{1}{T_g} = \frac{X^1}{{T_g}^1} + \frac{X^2}{{T_g}^2} + \cdots \frac{X^n}{{T_g}^n}$$

wobei $X^1, X^2, ..., X^n$ die Massenbrüche der Monomeren 1, 2, ..., n und ${T_g}^1, {T_g}^2, ..., {T_g}^n$ die Glasübergangstemperaturen der jeweils nur aus einem der Monomeren 1, 2, ..., n aufgebauten Polymeren in Grad Kelvin bedeuten. Quellen für tabellierte Glasübergangstemperaturen von Homopolymeren sind z.B. Ullmann's Encyclopedia of Industrial Chemistry, 5$^{th}$ ed., VCH, Weinheim, Vol. A 21 (1992) S. 169 und J. Brandrup, E.H. Immergut, Polymer Handbook 2$^{nd}$ ed, J. Wiley, New York 1975, pp 139-192.

Erfindungsgemäß umfassen die Monomere A, die in der Regel wenigstens 90 Gew.-% und vorzugsweise wenigstens 95 Gew.-%, insbesondere wenigstens 98 Gew.-%, des Polymeren P ausmachen, wenigstens ein Monomer A1 und wenigstens ein Monomer A2. Beispiele für Monomere A1 sind Ethylacrylat, Isopropylacrylat, n-Butylacrylat, n-Hexylacrylat, n-Octylacrylat, 2-Ethylhexylacrylat und Decylacrylat, vorzugsweise Ethylacrylat, n-Butylacrylat und 2-Ethylhexylacrylat. Bevorzugte Monomere A2 sind die $C_1$-$C_4$-Alkylester der Methacrylsäure, insbesondere Methylmethacrylat und n-Butylmethacrylat. Neben den bevorzugten Monomeren A2 kann das Polymer P auch andere Alkylester der Methacrylsäure, beispielsweise 2-Ethylhexylmethacrylat einpolymerisiert enthalten.

In einer besonders bevorzugten Ausführungsform der vorliegenden Erfindung enthält das Polymer P als Monomer A1 ausschließlich 2-Ethylhexylacrylat, besonders bevorzugt in Verbindung mit Methylmethacrylat als Monomer A2. In einer anderen bevorzugten Ausführungsform enthält das Polymer P n-Butylacrylat als alleiniges Monomer A1 oder eine Kombination aus n-Butylacrylat und 2-Ethylhexylacrylat als Monomere A1 einpolymerisiert.

Das Gewichtsverhältnis der Monomere A1:A2 hängt naturgemäß von der gewünschten Glasübergangstemperatur des Monomeren P und somit von den Glasübergangstemperaturen der zu den Polymeren korrespondierenden Homopolymere ab. Es liegt vorzugsweise im Bereich von 2:8 bis 8:2, insbesondere 3:7 bis 7:3 und besonders bevorzugt im Bereich von 6:4 bis 4:6.

Als Monomere B kommen insbesondere Acrylsäure und Methacrylsäure in Betracht. Das Polymer P enthält nicht mehr als 0,8 Gew.-%, beispielsweise 0,1 bis 0,8 Gew.-% Monomere B, bezogen auf das Gesamtgewicht des Polymeren P (bzw. der Monomere A - F).

Das Polymer P enthält das Monomere B, als alleinige saure Monomere einpolymerisiert.

Weiterhin können die Polymere P bis zu 2 Gew.-% Monomere D einpolymerisiert enthalten, die unter den Amiden monoethylenisch ungesättigter Carbonsäuren mit 3 bis 6 C-Atomen ausgewählt sind, beispielsweise Acrylamid oder Methacrylamid. In einer bevorzugten Ausführungsform der vorliegenden Erfindung enthalten die Polymere P 0,2 bis 2 Gew.-% und insbesondere 0,5 bis 1,5 Gew.-% Monomere D einpolymerisiert.

Anstelle oder zusammen mit den Monomeren D können die erfindungsgemäßen Polymere P auch Monomere E in einer Menge von vorzugsweise bis zu 4 Gew.-% einpolymerisiert enthalten. Sofern das Polymer P Monomere E einpolymerisiert enthält, liegt ihr Gewichtsanteil, bezogen auf die Gesamtmenge der Monomeren A bis E, vorzugsweise im Bereich von 0,2 bis 4 Gew.-%. Sofern es sich bei dem Monomeren E um ein Monomer E1 handelt, liegt sein Gewichtsanteil vorzugsweise im Bereich von 1 bis 5 Gew.-%, insbesondere im Bereich von 2 bis 4 Gew.-%. Sofern es sich bei dem Monomeren E um ein Monomer E2 handelt, liegt sein Gewichtsanteil vorzugsweise im Bereich von 0,2 bis 5 Gew.-%, insbesondere im Bereich von 0,5 bis 4 Gew.-%. Beispiele für Monomere E1 sind 2-Hydroxyethylacrylat, 2-Hydroxyethylmethacrylat, Hydroxypropylacrylat, Hydroxypropylmethacrylat, Hydroxybutylacrylat und Hydroxybutylmethacrylat. Beispiele für Monomere E2 sind die Ester der Acrylsäure sowie die Ester der Methacrylsäure mit Poly-$C_2$-$C_3$-alkylenoxiden, wie Polyethylenoxid, Polypropylenoxid und Polyethylenoxid/Polypropylenoxid-Blockcopolymeren, wobei der Alkoxylierungsgrad typischerweise im Bereich von 2 bis 200 und vorzugsweise im Bereich von 5 bis 100 liegen kann. Bevorzugt hierunter sind die Ester der Acrylsäure und der Methacrylsäure mit Polyethylenoxiden.

Als weitere Monomere kommen monoethylenisch ungesättigte Monomer F in Betracht, welche entweder eine Acetylacetoxygruppe oder eine Harnstoffgruppe aufweisen. Derartige Monomere dienen der Verbesserung der Nasshaftung der Beschichtung und können in den Bindemitteln in einer Menge von bis zu 5 Gew.-%, vorzugsweise bis 4 Gew.-%, z. B. 0,1 bis 5 Gew.-%, vorzugsweise 0,2 bis 4 Gew.-%, insbesondere 0,5 bis 2 Gew.-%, enthalten sein. Zu

den Monomeren F zählen N-Vinyl- und N-Allylharnstoff, N-Vinyloxyethyl und N-Allyloxyethylimidazolidin-2-on, N-(2-(Meth)acrylamidoethyl)- und N-(2-(Meth)acryloxyethyl)imidazolidin-2-on, als Monomere mit Harnstoffunktion, sowie 2-(2'-Acetylacetoxy)ethyl(meth)acrylsäureester und N-[2-(2'Acetylacetoxy)ethyl](meth)acrylamid, als Monomere mit Acetylacetoxygruppe.

Ferner hat es sich als vorteilhaft erwiesen, wenn die Polymerisatteilchen in der Bindemittelpolymerisatdispersion einen gewichtsmittleren Polymerisatteilchendurchmesser im Bereich von 50 bis 500 nm (bestimmt mittels Ultrazentrifuge oder Photonenkorrelationsspektroskopie; zur Teilchengrößenbestimmung mittels Ultrazentrifuge siehe z.B. W. Mächtle, Makromolekulare Chemie, 1984, Bd. 185, 1025-1039, W. Mächtle, Angew. Makromolekulare Chemie, 1988, 162, 35-42) aufweisen. Bei Bindemitteldispersionen mit hohen Feststoffgehalten, z.B. > 50 Gew.-%, bezogen auf das Gesamtgewicht der Bindemitteldispersion, ist es aus Gründen der Viskosität von Vorteil, wenn der gewichtsmittlere Teilchendurchmesser der Polymerteilchen in der Dispersion ≥ 100 nm ist. Der mittlere Teilchendurchmesser wird vorzugsweise 300 nm und insbesondere 200 nm nicht überschreiten.

Die Herstellung der wässrigen Dispersionen des Polymeren P erfolgt in der Regel durch radikalische wässrige Emulsionspolymerisation der genannten Monomere A - F in Gegenwart wenigstens eines radikalischen Polymerisationsinitiators und wenigstens einer grenzflächenaktiven Substanz.

Als radikalische Polymerisationsinitiatoren kommen alle diejenigen in Betracht, die in der Lage sind, eine radikalische wässrige Emulsionspolymerisation auszulösen. Es kann sich dabei sowohl um Peroxide, z.B. Alkalimetallperoxodisulfate als auch um Azoverbindungen handeln. Als Polymerisationsinitiatoren werden häufig sog. Redoxinitiatoren verwendet, die aus wenigstens einem organischen Reduktionsmittel und wenigstens einem Peroxid und/oder Hydroperoxid zusammengesetzt sind, z.B. tert.-Butylhydroperoxid mit Schwefelverbindungen, z.B. dem Natriumsalz der Hydroxymethansulfinsäure, Natriumsulfit, Natriumdisulfit, Natriumthiosulfat oder Acetonbisulfit-Addukt oder Wasserstoffperoxid mit Ascorbinsäure. Auch werden kombinierte Systeme verwendet, die eine geringe Menge einer im Polymerisationsmedium löslichen Metallverbindung enthalten, deren metallische Komponente in mehreren Wertigkeitsstufen auftreten kann, z.B. Ascorbinsäure/Eisen(II)sulfat/Wasserstoffperoxid, wobei anstelle von Ascorbinsäure auch häufig das Natriumsalz der Hydroxymethansulfinsäure, Acetonbisulfit-Addukt, Natriumsulfit, Natriumhydrogensulfit oder Natriumbisulfit und anstelle von Wasserstoffperoxid organische Peroxide wie tert.-Butylhydroperoxid oder Alkaliperoxodisulfate und/oder Ammoniumperoxodisulfat verwendet werden. Ebenfalls bevorzugte Initiatoren sind Peroxodisulfate, wie Natriumperoxodisulfat. Vorzugsweise beträgt die Menge der eingesetzten radikalischen Initiatorsysteme, bezogen auf die Gesamtmenge der zu polymerisierenden Monomeren, 0,1 bis 2 Gew.-%.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 20 Gew.-%, bezogen auf die Monomere A - F (bzw. Polymer P) eingesetzt. Zur Stabilisierung der wässrigen Dispersion des Polymeren P wird man in der Regel wenigstens 0,5 Gew.-%, vorzugsweise wenigstens 1 und insbesondere wenigstens 1,5 Gew.-% grenzflächenaktive Substanzen einsetzen. Die bei der Herstellung der wässrigen Dispersionen der Polymere P eingesetzten grenzflächenaktiven Substanzen können während oder vor dem Polymerisationsprozess der Polymerisationsreaktion zugesetzt werden. Ein Teil kann auch nach der Herstellung der Polymerdispersion zu ihrer Stabilisierung zugesetzt werden. Da die grenzflächenaktiven Verbindungen in den Polymerdispersionen verbleiben, bestimmen sie auch das Eigenschaftsbild der erfindungsgemäßen Beschichtungsmittel mit. Aus diesem Grund werden in den erfindungsgemäßen Beschichtungsmitteln bevorzugt wässrige Dispersionen des Polymeren P eingesetzt die nicht mehr als 10, insbesondere nicht mehr als 8 und besonders bevorzugt nicht mehr als 5 Gew.-% grenzflächenaktive Substanzen, bezogen auf das Polymer P enthalten.

Geeignete Schutzkolloide sind beispielsweise Polyvinylalkohole, Stärke- und Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420.

Vorzugsweise werden als grenzflächenaktive Substanzen ausschließlich Emulgatoren eingesetzt, deren relative Molekulargewichte im Unterschied zu den Schutzkolloiden üblicherweise unter 2000 liegen. Sie können sowohl anionischer als auch nichtionischer Natur sein. Zu den anionischen Emulgatoren zählen Alkali- und Ammoniumsalze von Alkylsulfaten (Alkylrest: $C_8$-$C_{12}$), von Mono- und Di-$C_4$-$C_{12}$-alkylestern der Sulfobernsteinsäure, von Schwefelsäurehalbestern ethoxylierter Alkanole (EO-Grad: 2 bis 50, Alkylrest: $C_{12}$ bis $C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$ bis $C_{18}$), weiterhin Verbindungen der allgemeinen Formel I,

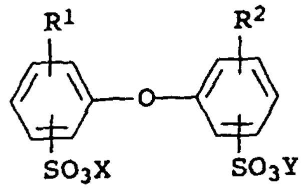

(I)

worin $R^1$ und $R^2$ Wasserstoff oder $C_4$-$C_{24}$-Alkyl, vorzugsweise $C_8$-$C_{16}$-Alkyl bedeuten und nicht gleichzeitig Wasserstoff sind, und X und Y Alkalimetallionen und/oder Ammoniumionen sein können. Häufig werden technische Gemische verwendet, die einen Anteil von 50 bis 90 Gew.-% des monoalkylierten Produktes aufweisen, beispielsweise Dowfax® 2A1 ($R^1$ = $C_{12}$-Alkyl; DOW CHEMICAL). Die Verbindungen I sind allgemein bekannt, z.B. aus der US-A-4,269,749, und im Handel erhältlich.

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden aliphatische Emulgatoren, z.B. Ethoxylate langkettiger Alkanole (Alkylrest: $C_{10}$-$C_{22}$, mittlerer Ethoxylierungsgrad: 3 bis 50) und darunter besonders bevorzugt solche auf Basis von nativen Alkoholen oder Oxoalkoholen mit einem linearen oder verzweigten $C_{12}$-$C_{18}$-Alkylrest und einem Ethoxilierungsgrad von 8 bis 50.

Vorzugsweise enthalten die Dispersionen des Polymeren P wenigstens einen anionischen Emulgator, wobei Verbindungen der Formel I und die vorstehend genannten Alkylsulfate, insbesondere die Natriumsalze bevorzugt sind. Bevorzugt sind Kombinationen aus Verbindungen der Formel I und Alkylsulfaten. Vorzugsweise beträgt die Menge an anionischen Emulgatoren wenigstens 0,5 Gew.-%, insbesondere wenigstens 1 Gew.-% und besonders bevorzugt wenigstens 2 Gew.-%. Vorzugsweise wird sie 5 Gew.-% nicht überschreiten.

Außerdem hat es sich als günstig erwiesen, wenn die zur Stabilisierung eingesetzten grenzflächenaktiven Substanzen neben den vorstehend genannten anionischen Emulgatoren auch nichtionische Emulgatoren umfassen, und zwar vorzugsweise in Mengen von wenigstens 0,5 Gew.-% und insbesondere wenigstens 0,5 Gew.-%, z.B. in Mengen von 0,3 bis 5 Gew.-% und insbesondere 0,5 bis 3 Gew.-%. Besonders bevorzugt liegt das Gewichtsverhältnis von anionischen zu nichtionischen Emulgatoren im Bereich von 10:1 bis 1:2 und insbesondere im Bereich von 5:1 bis 1:1.

Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208).

Die Emulsionspolymerisation kann sowohl kontinuierlich als auch nach der Batchfahrweise, vorzugsweise nach einem halbkontinuierlichen Verfahren erfolgen. Bei halbkontinuierlichen Verfahren wird die Hauptmenge, d.h. wenigstens 70 %, vorzugsweise wenigstens 90 % der zu polymerisierenden Monomere kontinuierlich, einschließlich Stufen- oder Gradientenfahrweise, dem Polymerisationsansatz zugeführt. Diese Vorgehensweise wird auch als Monomerzulaufverfahren bezeichnet. Unter Monomerzulauf versteht man flüssige Monomermischungen, Monomerlösungen oder insbesondere wäßrige Monomeremulsionen, die einen Teil oder die Gesamtmenge der benötigten grenzflächenaktiven Substanz enthält.

Neben der saatfreien Herstellungsweise kann zur Einstellung einer definierten Polymerteilchengröße die Emulsionspolymerisation nach dem Saatlatex-Verfahren oder in Gegenwart von in situ hergestellten Saatlatex erfolgen. Verfahren hierzu sind bekannt und können dem Stand der Technik entnommen werden (siehe EP-B 40419, EP-A-614 922, EP-A-567 812 und dort zitierte Literatur sowie 'Encyclopedia of Polymer Science and Technology', Vol. 5, John Wiley & Sons Inc., New York 1966, S. 847).

Vorzugsweise wird die Polymerisation in Anwesenheit von 0,01 bis 3 Gew.-% und insbesondere 0,02 bis 1,5 Gew.-% eines Saatlatex (Feststoffgehalt des Saatlatex, bezogen auf Gesamtmonomermenge), vorzugsweise mit vorgelegtem Saatlatex (Vorlagensaat) durchgeführt. Der Saatlatex kann auch in situ aus den zu polymerisierenden Monomeren erzeugt werden, indem man zunächst eine geringe Menge der zu polymerisierenden Monomere als wässrige Emulsion zusammen mit einem Teil der grenzflächenaktiven Substanz vorlegt, diese Emulsion auf Polymerisationstemperatur erwärmt und dann einen Teil des Initiators in einer Portion zugibt.

Polymerisationsdruck und Polymerisationstemperatur sind von untergeordneter Bedeutung. Im Allgemeinen arbeitet man bei Temperaturen zwischen Raumtemperatur und 120°C, vorzugsweise bei Temperaturen von 40 bis 95°C und besonders bevorzugt zwischen 50 und 90°C.

Im Anschluss an die eigentliche Polymerisationsreaktion ist es in der Regel erforderlich, die erfindungsgemäßen wässrigen Polymerisatdispersionen weitgehend frei von Geruchsträgern, wie Restmonomeren und anderen flüchtigen organischen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere

unter Einwirkung von Redoxinitiatorsystemen, wie sie z.B. in der DE-A 44 35 423, DE-A 44 35 422 oder der DE-A 44 19 518 aufgeführt sind, erfolgen. Bevorzugt wird die Nachpolymerisation mit einem Redoxinitiatorsystem aus wenigstens einem organischen Peroxid und einem organischen Sulfit durchgeführt.

Als Peroxide zur redoxinitiierten Nachpolymerisation kommen insbesondere neben Wasserstoffperoxid auch tert.-Butylhydroperoxid, Cumolhydroperoxid und Alkaliperoxodifulfate, wie Natrium- und Ammoniumperoxodisulfat, in Betracht. Geeignete Reduktionsmittel sind beispielsweise Natriumdisulfit, Natriumhydrogensulfit, Natriumdithionit, Natriumhydroxymethansulfinat, Formamidinsulfonsäure, Ascorbinsäure, Acetonbisulfit-Addukt, reduzierend wirkende Zuckerverbindungen oder wasserlösliche Mercaptane, z. B. 2-Mercaptoethanol, wobei Ascorbinsäure besonders bevorzugt wird. Gegebenenfalls wird zur redoxinitiierten Nachpolymerisation dem Redoxsystem ein lösliches Salz eines Metalls wechselnder Wertigkeit zugesetzt, z. B. Eisen-, Kupfer oder Vanadiumsalze und gegebenenfalls Komplexbildner wie EDTA. Die redoxinitiierte Nachpolymerisation erfolgt vorzugsweise bei Temperaturen im Bereich von 10 bis 100° C, insbesondere bei 20 bis 90°C. Die Nachpolymerisation erfolgt in der Regel über einen Zeitraum von 10 min bis 4 h. Die Zugabe des Initiators zur Nachpolymerisation kann in einer oder mehreren Portionen, gelöst oder ungelöst oder kontinuierlich, erfolgen. Bei der redoxinitiierten Nachpolymerisation erfolgt die Zugabe der Redoxpartner vorzugsweise getrennt voneinander. Vorzugsweise werden chemische und physikalische Desodorierung miteinander kombiniert, d. h. gleichzeitig oder vorzugsweise nacheinander durchgeführt. Insbesondere empfiehlt es sich, zunächst chemisch zu desodorieren und anschliessend physikalisch zu desodorieren.

Vorzugsweise werden die wässrigen Dispersionen des Polymeren P vor ihrem Einsatz in den erfindungsgemäßen Zubereitungen, vorzugsweise duch Zugabe einer nichtflüchtigen Base, z.B. Alkalimetall- oder Erdalkalimetallhydroxiden oder nichtflüchtigen Aminen, auf einen pH-Wert im Bereich von pH 6 bis pH 10 eingestellt.

Auf dem Wege der Emulsionspolymerisation sind grundsätzlich Dispersionen mit Feststoffgehalten bis zu etwa 80 Gew.-% (Polymergehalt, bezogen auf das Gesamtgewicht der Dispersion) erhältlich. Aus praktischen Erwägungen werden in der Regel für die erfindungsgemäßen Zubereitungen Polymerisatdispersionen mit Feststoffgehalten im Bereich von 40 bis 70 Gew.-% bevorzugt. Besonders bevorzugt werden Dispersionen mit Polymergehalten von etwa 45 bis 60 Gew.-%. Natürlich sind auch Dispersionen mit geringeren Feststoffgehalten prinzipiell für die erfindungsgemäßen Beschichtungsmittel einsetzbar.

Erfindungsgemäß werden die Polymere P in Form ihrer wässrigen Polymerisatdispersionen als Bindemittel in pigmenthaltigen Zubereitungen eingesetzt, die zur Beschichtung von Substraten dienen (pigmenthaltige Beschichtungsmittel). Hierunter versteht man Kunststoffdispersionsputze und Anstrichmittel, d.h. Dispersionsfarben, insbesondere Anstrichmittel für Aussenanwendungen (sog. Fassadenfarben).

Die hieraus erhältlichen Beschichtungen zeichnen sich insbesondere durch eine besonders gute Witterungsstabilität aus, insbesondere gegenüber Frosteinwirkung, d. h. die Farben zeigen insbesondere keine Enthaftung (z. B. in Form von Blasenbildung) bei Einwirkung von Frost in feuchter Atmosphäre. Ausserdem zeigen Polymerfilme der in den erfindungsgemässen Beschichtungsmittel als Bindemittel verwendeten Polymere P geringere Neigung zur Wasseraufnahme und zum Weissanlaufen.

Die erfindungsgemäßen Beschichtungsmittel, vorzugsweise die Dispersionsfarben enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel (Komponente I), Pigment (Komponente II), Füllstoff (Komponente III) und polymere Hilfsmittel (Komponente IV). Davon entfallen in der Regel etwa

i) 5 bis 40 Gew.-% auf feste Bindemittelbestandteile (Polymer P)

ii) 10 bis 30 Gew.-% auf wenigstens ein anorganisches Pigment, sowie

iii)15 bis 60 Gew.-% auf anorganische Füllstoffe,

iv) 0,1 bis 20 Gew.-%, vorzugsweise 0,5 bis 10 Gew.-%, auf übliche Hilfsmittel,

wobei die Pigmentvolumenkonzentration PVK der Beschichtungsmittel erfindungsgemäß wenigstens 20 beträgt und in der Regel 65 nicht überschreitet. In Beschichtungsmitteln in Form von Dispersionsfarben für Außenanwendungen liegt die PVK vorzugsweise im Bereich von 20 bis 60 und insbesondere im Bereich von 30 bis 60, und speziell im Bereich von 35 bis 59.

Typische Pigmente II für die erfindungsgemäßen Zubereitungen, insbesondere für Dispersionsfarben, sind Weißpigmente wie Titandioxid, vorzugsweise in der Rutilform, Bariumsulfat, Zinkoxid. Die Zubereitungen können jedoch auch farbige Pigmente, beispielsweise Eisenoxide, Ruß, lumineszente Pigmente, Zinkgelb, Zinkgrün oder Ultramarin enthalten. Bevorzugtes Weißpigment ist Titandioxid.

Geeignete Füllstoffe III umfassen Alumosilicate, wie Feldspäte, Silicate, wie Kaolin, Talkum, Glimmer, Wollastonit, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid, Plastorit®, etc. Die Füllstoffe können als Einzelkomponenten eingesetzt werden. In der Praxis haben sich Füllstoffmischungen besonders bewährt, z.B. Calciumcarbonat/Kaolin, Calciumcarbonat/Talkum.

Zur Erhöhung der Deckkraft und zur Einsparung von Weißpigmenten werden in Dispersionsfarben mit überkritischer Formulierung (hochgefüllte Farben; PVK > PVK kritisch) häufig feinteilige Füllstoffe, z.B. feinteiliges Calciumcarbonat oder Mischungen verschiedener Calciumcarbonate mit unterschiedlichen Teilchengrößen eingesetzt. Zur Einstellung der Deckkraft, des Farbtons und der Farbtiefe werden vorzugsweise Abmischungen aus Farbpigmenten und Füllstoffen eingesetzt.

Zu den üblichen Hilfsmitteln IV zählen Netz- oder Dispergiermittel, wie Natrium, Kalium- oder Ammoniumpolyphosphate, Alkalimetall- und Ammoniumsalze von Polyacrylsäuren und von Polymaleinsäure, Polyphosphonate, wie 1-Hydroxyethan-1,1-diphosphonsaures Natrium sowie Naphthalinsulfonsäuresalze, insbesondere deren Natriumsalze. Die Dispergiermittel werden in der Regel in einer Menge von 0,1 bis 0,6 Gew.-% bezogen auf das Gesamtgewicht der Dispersionsfarbe eingesetzt. Weiterhin umfassen die Hilfsmittel IV in der Regel auch Entschäumer, Konservierungs- oder Hydrophobiermittel, Biozide, Fasern oder weitere Bestandteile.

Weiterhin umfassen die Hilfsmittel IV gegebenenfalls auch Verdickungsmittel, beispielsweise Cellulosederivate, wie Methylcellulose, Hydroxyethylcellulose und Carboxymethylcellulose, ferner Casein, Gummiarabikum, Tragantgummi, Stärke, Natriumalginat, Polyvinylalkohol, Polyvinylpyrrolidon, Natriumpolyacrylate, wasserlösliche Copolymerisate auf Acryl- und Methacrylsäurebasis, wie Acrylsäure/Acrylamid- und Methacrylsäure/Acrylester-Copolymerisate und sog. Assoziativverdicker, beispielsweise Styrol-Maleinsäureanhydrid-Polymerisate, spezielle Polyacrylat-Verdicker, hydrophobmodifizierte Cellulose oder vorzugsweise hydrophob modifizierte Polyetherurethane, wie sie beispielsweise von N. Chen et al. in J. Coatings Techn., Vol. 69, No. 867, 1997, S. 73 und von R.D. Hester et al. J. Coatings Technology, Vol. 69, No. 864, 1997, S. 109 beschrieben sind und auf deren Offenbarung hiermit in vollem Umfang Bezug genommen wird. Auch anorganische Verdikkungsmittel, z.B. Bentonite oder Hektorit, können verwendet werden. Verdickungsmittel werden im Allgemeinen in Mengen von 0,1 bis 3 Gew.-%, vorzugsweise 0,1 bis 1 Gew.-%, bezogen auf das Gesamtgewicht der wässrigen Zubereitung, verwendet.

Die erfindungsgemäßen Beschichtungsmittel sind stabile fluide Systeme, die man zur Beschichtung von einer Vielzahl von Substraten verwenden kann. Geeignete Substrate sind beispielsweise Holz, Beton, Metall, Glas, Keramiken, Plastik, Putze, Tapeten, gestrichene, grundierte oder verwitterte Untergründe. Das Aufbringen des Beschichtungsmittels auf das zu beschichtende Substrat erfolgt in einem von der Ausgestaltung der Zubereitung abhängigen Weise. Das Aufbringen kann, abhängig von Viskosität und Pigmentgehalt sowie dem Substrat mittels Rollen, Bürsten, Rakeln oder als Spray erfolgen. Die erfindungsgemäßen Beschichtungsmittel können sowohl als Deckfarbe für grundierte und für nicht grundierte Untergründe sowie als Grundierungsmittel verwendet werden, wobei letztere in der Regel einen geringeren Feststoffgehalt aufweisen.

In den erfindungsgemässen Beschichtungsmitteln zählen definitionsgemäss kunstharzgebundene Putze. Diese weisen in der Regel einen höheren Gehalt an Füllstoffen und geringeren Pigment- und Bindemittelanteil auf. Zu den kunstharzgebundenen Putzen zählen beispielsweise Streichputze, Reibeputze, Spachtelputze sowie Buntsteinputze. Die PVK derartiger Putze liegt in der Regel oberhalb 60, insbesondere oberhalb 65.

Je nach Art des erfindungsgemässen Putzes enthält er die oben genannten Füllstoffe in Mengen von 60 bis 90 Gew.-%, insbesondere 75 bis 90 Gew.-%, Polymer P in Mengen von 5 bis 15 Gew.-%, Pigmente in Mengen von 0 bis 10 Gew.-%, z. B. 1 bis 10 Gew.-%, sowie Hilfsstoffe von 0.1 bis 15 Gew.-%, jeweils bezogen auf das Gesamtgewicht der nichtflüchtigen Bestandteile im Beschichtungsmittel.

Neben den obengenannten Füllstoffen enthalten die Putze gegebenenfalls auch grobere Füllstoffbestandteile, z. B. farbige Silikate oder Quarzteilchen bei Buntsteinputzen oder Glasfasern bei Spachtelputzen.

Zu den erfindungsgemässen Beschichtungsmitteln zählen auch hochgefüllte Dispersionsfarben mit einer PVK oberhalb 65, insbesondere oberhalb 70. Derartige Beschichtungsmittel zeichnen sich durch eine verbesserte Wasch- und Scheuerbeständigkeit aus und erfüllen beispielsweise die DIN-NORM 53778 Teil 2 der Waschbeständigkeit auch ohne Zusatz von Filmbildehilfsmitteln.

Die erfindungsgemäßen Beschichtungsmittel zeichnen sich durch eine gute Witterungsstabilität insbesondere gegenüber Frosteinwirkung aus. Überdies zeichnen sich die erfindungsgemässen Beschichtungszusammensetzungen durch Geruchsarmut, Anschmutzresistenz, Wasserfestigkeit und eine hohe Scheuerfestigkeit aus.

Die im Folgenden aufgeführten Beispiele sollen die Erfindung verdeutlichen, ohne sie jedoch einzuschränken.

I. Herstellung und Charakterisierung der Polymerisatdispersionen (Polymere P)

Die mittlere Teilchengröße (z-Mittelwert) der Polymerisatteilchen wurde durch dynamische Lichtstreuung (Photonenkorrelationsspektroskopie) an einer 0,01 gew.-%igen Dispersion in Wasser bei 23°C mittels eines Autosizers IIc der Fa. Malvern Instruments, England, ermittelt. Angegeben wird der mittlere Durchmesser der Kumulantenauswertung (cumulant z-average) der gemessenen Autokorrelationsfunktion.

Die Mindestfilmbildetemperatur (MFT) der Polymerisatdispersionen erfolgte in Anlehnung an Ullmanns Enzyklopädie der technischen Chemie, 4. Aufl. Bd. 19, VCH Weinheim 1980, S. 17. Als Messgerät diente eine sogenannte Filmbildebank (Metallplatte, an die ein Temperaturgradient angelegt wird und an die zur Temperaturkalibrierung an verschiedenen Stellen Temperatursensoren angebracht sind, wobei der Temperaturgradient so gewählt wird, dass das eine Ende der Filmbildebank eine Temperatur oberhalb der zu erwartenden MFT und das andere Ende eine Temperatur unterhalb der zu erwartenden MFT aufweist). Auf die Filmbildebank wird nunmehr die wässrige Polymerisatdispersion aufgebracht. In den Bereichen der Filmbildebank, deren Temperatur oberhalb der MFT liegt, bildet sich beim Trocknen ein klarer Film aus, wohingegen sich in den kühleren Bereichen Risse im Film auftreten und bei noch niedrigeren Temperaturen sich ein weißes Pulver bildet. Anhand des bekannten Temperaturprofils der Platte wird die MFT visuell bestimmt.

I. Herstellung der Bindemitteldispersionen P1 bis P4

In einem 2 1-Glasgefäß wurden 32 g eines 33% Saatlatex in 250 g entionisiertem Wasser und 6,6 g einer 5%-igen Lösung von Natriumperoxodisulfat in entionisiertem Wasser vorgelegt und auf 95°C aufgeheizt. Dann wurden über 180 min eine Emulsion aus 284 g entionisiertem Wasser, 12,6 g einer 90%-igen Lösung eines achtfach ethoxylierten iso-$C_{13}$-Oxoalkohols, 16,7 g einer 45%-igen Lösung von Dowfax® 2A1 (Dow Chemical), 25 g einer 15%-igen Lösung von Natriumlaurylsulfat, 15 g einer 50%-igen Lösung von Acrylamid, x g Methylmethacrylat, y g 2-Ethylhexylacrylat und z g Acrylsäure, sowie eine Lösung von 1,7 g Natriumperoxodisulfat in 58 g entionisiertem Wasser zugefahren. Nach einer Nachpolymerisationszeit von 30 min wurden bei 90°C 0,55 g einer 70%-igen Lösung von tert. -Butylhydroperoxid in 3,5 g VE-Wasser und 0,38 g Ascorbinsäure in 20 g VE-Wasser innerhalb einer Stunde zugefahren, und der pH der Proben auf 7 eingestellt. Dann wurde die erhaltene Dispersion mit Wasserdampf im Sinne einer Umlaufdesodorierung behandelt und anschliessend auf Raumtemperatur abgekühlt. Die Einsatzstoffe sind in Tabelle 1 angegeben. Die MFT aller Polymerisate lag unterhalb 3° C.

Tabelle 1

| | P 1 | P 2 | P 3 | P 4 |
|---|---|---|---|---|
| x [g] | 362,6 | 363,8 | 362,6 | 362,6 |
| y [g] | 377,6 | 378,8 | 377,6 | 377,6 |
| z [g]/% | 3,75 / 0,51 | 0 / 0 | 5,6 / 0,75 | 7,5 / 1,0 |
| Feststoffgehalt (%) | 52,9 | 52,5 | 53,1 | 52,5 |
| Teilchengröße (nm) | 131 | 129 | 131 | 132 |

II. Herstellung der erfindungsgemäßen Beschichtungsmittel (Beispiele 1 bis 3, Vergleichsbeispiel 1)

Es wurde eine Pigmentpaste angesetzt aus 623 g Wasser, 14 g Dispergierhilfsmittel[1)], 28 g einer 25%-igen wässrigen Natriumpolyphosphat-Lösung[2)], 21 g Konservierungsmittel[3)], 14 g Entschäumer[4)], 420 g einer 2%-igen wässrigen Hydroxyethylcellulose-Lösung[5)], 14 g einer 20%-igen Lösung von NaOH, 1099 g Titanoxid[6)], 1274 g Calciumcarbonat[7)] und 392 g Micro Talc[8)]. Zu 278,5 g der Paste wurden dann u g Polymerdispersion, 0,5 g Entschäumer[4)], sowie v g einer 5%-igen wässrigen Lösung eines Assoziativverdickers[9)] und w g entionisiertes Wasser zugegeben. Die Einsatzmengen u, v und w sind in Tabelle 2 angegeben.

III Anwendungstechnische Prüfung

a) Frost-Tau-Prüfung

Die nach II erhaltenen Farben wurden in drei Schichten in einer Gesamtmenge von 300 g/$m^2$ aufgebracht.

1) Pigmentverteiler S: 30 gew.-%ige Natriumpolyacrylat-Lösung (BASF Aktiengesellschaft)
2) Calgon® N; BK Ladenburg, Ladenburg Deutschland
3) Parmetol A26 der Schultze und Mayr GmbH, Norderstedt
4) Agitan® 280; Münzig Chemie GmbH, Heilbronn
5) wässrige Hydroxyethylcellulose-Lösung; Natrosol® 250HR; Hercules GmbH, Düsseldorf (Verdicker)
6) Titanpigment-Rutiltyp; Kronos 2190 der Kronos Titan GmbH, Leverkusen
7) Omyacarb 5 GU; Omya GmbH, Köln
8) Micro Talc AT1 (Hersteller Norwegian Talc Deutschland GmbH, Bad Soden-Salmünster)
9) Acrysol® TT-935; Rohm & Haas Deutschland GmbH, Frankfurt.

Als 1. Schicht wurde eine mit Wasser im Verhältnis 1:1 verdünnte Farbe aufgetragen. Die 2. und 3. Schicht erfolgte durch Auftragen der unverdünnten Farbe. Zwischen jedem Farbauftrag liess man 24 h trocknen.
Anschliessend lagerte man die beschichtete Platte 7 h in Wasser, danach mit Wasserbehälter 16 h bei -20° C, taute dann die Probe auf und beurteilte ihr Aussehen. Dies wurde zweimal wiederholt (2. und 3. Frost/Tau-Wechsel).

b) Wasseraufnahme

Zur Bestimmung der Wasseraufnahme wurde aus den nach I erhaltenen Polymerisatdispersionen ein Polymerfilm gegossen. Dieser wurde getrocknet, gewogen und anschliessend 24 h in Wasser gelagert. Die so erhaltenen Polymerfilme wurden nach Entfernen der anhängenden Wassertropfen gewogen. Die Zunahme des Gewichts in % bezogen auf das Ausgangsgewicht ist in Tabelle 2 angegeben.
Die Blasenbildung, Delamination und Rißbildung wurde nach einem Notensystem beurteilt. Hierbei bedeutet Note 0 = einwandfreier Zustand, Note 1 = leichte Blasenbildung, Note 2 = deutliche Blasenbildung, Note 3 = Blasenbildung, beginnende Delamination, Note 4 = vereinzelte Delamination, Note 5 = großflächige Delamination. Die Ergebnisse sind in Tabelle 2 zusammengestellt. Es wurde jeweils eine Doppelbestimmung durchgeführt.

Tabelle 2

| | Beispiel 1 [P1] | Beispiel 2 [P2] | Beispiel 3 [P3] | Vergleichsbeispiel [P4] |
|---|---|---|---|---|
| u [g] | 185 | 187 | 180 | 182 |
| v [g] | 17 | 9 | 20 | 25 |
| w [g] | 19 | 25 | 21 | 14 |
| 1.Frost-Tau-Wechsel [1)] | 0/0 | 0/0 | 0/0 | 5/5 |
| 2. Frost-Tau-Wechsel [1)] | 2/1 | 3/4 | 2/4 | 5/5 |
| 3. Frost-Tau-Wechsel [1)] | 3/1 | 3/4 | 2/4 | 5/5 |
| Wasseraufnahme[2)] [%] | 10.2 | 9.1 | 10.5 | 14.3 |

[1)] Bestimmt an Farbformulierung
[2)] Bestimmt an Polymer

**Patentansprüche**

1. Pigmenthaltiges Beschichtungsmittel auf Wasserbasis, das im Wesentlichgen frei ist von flüchtigen, wasserunlöslichen organischen Verbindungen, enthaltend

    i) eine wässrige Bindemittelzubereitung als Komponente I mit einer Mindestfilmbildetemperatur MFT ≤ 5°C auf Basis einer wässrigen Polymerdispersion eines oder mehrerer Polymere P, die aufgebaut sind aus

    90 bis 99,9 Gew.-% — wenigstens zwei voneinander verschiedener Monomersorten A1 und A2, wobei das Monomer A1 ausgewählt ist unter den $C_2$-$C_{12}$-Alkylestern der Acrylsäure und das Monomer A2 ausgewählt ist unter den $C_1$-$C_{12}$-Alkylestern der Methacrylsäure;

    0 bis 0,8 Gew.-% — Monomeren B, ausgewählt unter monoethylenisch ungesättigten Monocarbonsäuren mit 3 bis 6 C-Atomen als alleinige saure Monomere;

    0 bis 2 Gew.-% — Monomeren D, ausgewählt unter den Amiden monoethylenisch ungesättigter Monocarbonsäuren mit 3 bis 6 C-Atomen, und

    0 bis 5 Gew.-% — Monomeren E, ausgewählt unter den Hydroxy-$C_2$-$C_4$-alkylestern monoethylenisch ungesättigter Monocarbonsäuren mit 3 bis 6 C-Atomen (Monomere E1) und den Estern monoethylenisch ungesättigter Monocarbonsäuren mit 3 bis 6 C-Atomen mit Poly-$C_2$-$C_3$-alkylen-oxiden (Monomere E2), und

    0 bis 5 New.-% — Monomere F, ausgewählt unter monoethylenisch ungesättigten Monomeren mit Harnstoffgruppen und monoethylenisch ungesättigten Monomeren mit einer Acetylacetoxy-

Gruppe ($CH_3C(O)CH_2C(O)$-O-Gruppe),

wobei
alle Mengenanteile der Monomere auf die Gesamtmenge der Monomere A bis F bezogen sind;
die Gesamtmenge der Monomere B, D, E und F 0,1 bis 10 Gew.-% beträgt;

ii) wenigstens ein anorganisches, teilchenförmiges Pigment als Komponente II

iii) gegebenenfalls anorganische, teilchenförmige Füllstoffe als Komponente III, und

iv) die für Beschichtungsmittel typischen Hilfsmittel,

wobei das Beschichtungsmittel weniger als 0,05 Gew.-%, bezogen auf das Polymer P, Photoinitiatoren enthält und durch eine Pigmentvolumenkonzentration PVK oberhalb 20 gekennzeichnet ist.

**2.** Beschichtungsmittel nach Anspruch 1, worin die Monomere A1 ausgewählt sind unter Ethylacrylat, n-Butylacrylat und 2-Ethylhexylacrylat und die Monomere A2 ausgewählt sind unter Methylmethacrylat und n-Butylmethacrylat.

**3.** Beschichtungsmittel nach Anspruch 1, worin das Polymer P 0,1 bis 0,8 Gew.-% Acrylsäure und/oder Methacrylsäure einpolymerisiert enthält.

**4.** Beschichtungsmittel nach Anspruch 1, worin das Polymer P als Monomer B 0,2 bis 2 Gew.-% wenigstens eines Monomers D und/oder 0,2 bis 4 Gew.-% wenigstens eines Monomers E einpolymerisiert enthält.

**5.** Beschichtungsmittel nach einem der vorhergehenden Ansprüche, wobei die Komponente I erhältlich ist durch radikalische wässrige Emulsionspolymerisation der Monomere A bis F in Gegenwart einer oder mehrerer oberflächenaktiver Verbindungen, umfassend wenigstens einen anionischen Emulgator und gegebenenfalls einen oder mehrere nichtionische Emulgatoren.

**6.** Beschichtungsmittel nach Anspruch 5, worin Komponente I nach der Emulsionspolymerisation mit nichtflüchtiger Base auf einen pH-Wert von 6 bis 10 eingestellt wurde.

**7.** Beschichtungsmittel nach einem der vorhergehenden Ansprüche, das weniger als 0,1 Gew.-% flüchtige organische Bestandteile (bezogen auf die Gesamtmenge des Beschichtungsmittels) enthält.

**8.** Beschichtungsmittel nach einem der vorhergehenden Ansprüche mit einer PVK im Bereich von 20 bis 65, insbesondere 30 bis 60.

**9.** Beschichtungsmittel nach einem der vorhergehenden Ansprüche in Form einer Dispersionsfarbe für Aussenanwendungen.

**10.** Beschichtungsmittel nach Anspruch 8 oder 9 enthaltend als nichtflüchtige Bestandteile

i) 5 bis 40 Gew.-% Komponente I

ii) 10 bis 30 Gew.-% Komponente II

iii) 15 bis 60 Gew.-% Komponente III

iv) 0,1 bis 20 Gew.-% die für Beschichtungsmittel üblichen Hilfsmittel.

## Claims

**1.** A water-based, pigmented coating composition essentially free from volatile organic compounds and comprising

i) an aqueous binder formulation as component I, with a minimum film formation temperature MFFT ≤ 5°C, based on an aqueous polymer dispersion of one or more polymers P composed of

| | |
|---|---|
| from 90 to 99.9% | by weight of at least two different monomer varieties A1 and A2, the monomer A1 being selected from the $C_2$-$C_{12}$ alkyl esters of acrylic acid and the monomer A2 being selected from the $C_1$-$C_{12}$ alkyl esters of methacrylic acid; |
| from 0 to 0.8% | by weight of monomers B, selected from monoethylenically unsaturated monocarboxylic acids having 3 to 6 carbon atoms as sole acidic monomers; |
| from 0 to 2% | by weight of monomers D, selected from the amides of monoethylenically unsaturated monocarboxylic acids having 3 to 6 carbon atoms; |
| from 0 to 5% | by weight of monomers E, selected from the $C_2$-$C_4$ hydroxyalkyl esters of monoethylenically unsaturated monocarboxylic acids having 3 to 6 carbon atoms (monomers E1) and the esters of monoethylenically unsaturated monocarboxylic acids having 3 to 6 carbon atoms with poly($C_2$-$C_3$ alkylene oxides) (monomers E2), and |
| from 0 to 5% | by weight of monomers F, selected from monoethylenically unsaturated monomers having a urea group and monoethylenically unsaturated monomers having an acetylacetoxy group ($CH_3C(O)CH_2C(O)$-O- group), |

all proportions of the monomers being based on the overall amount of the monomers A to F;
the overall amount of the monomers B, D, E and F being from 0.1 to 10% by weight;

ii) at least one inorganic particulate pigment as component II,

iii) if desired, inorganic particulate fillers as component III, and

iv) the auxiliaries typical of coating compositions,

the coating composition containing less than 0.05% by weight, based on the polymer P, of photoinitiators and being **characterized by** a pigment volume concentration PVC of more than 20.

**2.** A coating composition as claimed in claim 1, wherein the monomers A1 are selected from ethyl acrylate, n-butyl acrylate and 2-ethylhexyl acrylate and the monomers A2 are selected from methyl methacrylate and n-butyl methacrylate.

**3.** A coating composition as claimed in claim 1, wherein the polymer P contains from 0.1 to 0.8% by weight of acrylic acid and/or methacrylic acid in copolymerized form.

**4.** A coating composition as claimed in claim 1, wherein the polymer P contains as monomer B from 0.2 to 2% by weight of at least one monomer D and/or from 0.2 to 4% by weight of at least one monomer E in copolymerized form.

**5.** A coating composition as claimed in any of the preceding claims, wherein component I is obtainable by free-radical aqueous emulsion polymerization of the monomers A to F in the presence of one or more surface-active compounds, comprising at least one anionic emulsifier and, if desired, one or more nonionic emulsifiers.

**6.** A coating composition as claimed in claim 5, wherein following the emulsion polymerization component I has been adjusted to a pH of from 6 to 10 using nonvolatile base.

**7.** A coating composition as claimed in any of the preceding claims, containing less than 0.1% by weight of volatile organic constituents (based on the overall amount of the coating composition).

**8.** A coating composition as claimed in any of the preceding claims, having a PVC in the range from 20 to 65, in particular from 30 to 60.

**9.** A coating composition as claimed in any of the preceding claims, in the form of an emulsion paint for exterior applications.

**10.** A coating composition as claimed in claim 8 or 9, comprising as nonvolatile constituents

i) from 5 to 40% by weight of component I

ii) from 10 to 30% by weight of component II

iii) from 15 to 60% by weight of component III

iv) from 0.1 to 20% by weight of the auxiliaries customary for coating compositions.

## Revendications

1. Produit de revêtement pigmenté à base d'eau, qui est essentiellement exempt de composés organiques volatils, insolubles dans l'eau, contenant

   i) comme composant I, une préparation de liant aqueuse ayant une température de formation de film minimale MFT $\leq 5°C$ à base d'une dispersion aqueuse d'un ou de plusieurs polymères P, qui sont constitués de 90 à 99,9% en poids d'au moins deux sortes de monomères mutuellement différentes A1 et A2, le monomère A1 étant choisi parmi les esters alkyliques en $C_2$-$C_{12}$ de l'acide acrylique et le monomère A2 étant choisi parmi les esters alkyliques en $C_1$-$C_{12}$ de l'acide méthacrylique,
   de 0 à 0,8% en poids de monomères B, choisis parmi des acides monocarboxyliques monoéthyléniquement insaturés comportant 3 à 6 atomes de C, comme seuls monomères acides,
   de 0 à 2% en poids de monomères D, choisis parmi les amides d'acides monocarboxyliques monoéthyléniquement insaturés comportant 3 à 6 atomes de C, et
   de 0 à 5% en poids de monomères E, choisis parmi les esters hydroxyalkyliques en $C_2$-$C_4$ d'acides monocarboxyliques monoéthyléniquement insaturés comportant 3 à 6 atomes de C (monomères E1) et les esters d'acides monocarboxyliques monoéthyléniquement insaturés comportant 3 à 6 atomes de C avec des oxydes de polyalkylène en $C_2$-$C_3$ (monomères E2), et
   de 0 à 5% en poids de monomères F, choisis parmi des monomères monoéthyléniquement insaturés à groupes urée et des monomères monoéthyléniquement insaturés à groupe acétylacétoxy [groupe $CH_3C(O)CH_2C(O)$ -O-],
   toutes les proportions des monomères étant rapportées à la quantité totale des monomères A à F,
   la quantité totale des monomères B, D, E et F étant de 0,1 à 10% en poids,
   ii) comme composant II, au moins un pigment inorganique sous forme de particules,
   iii) éventuellement, comme composant III, des matières de remplissage inorganiques en forme de particules, et
   (iv) les adjuvants typiques d'un produit de revêtement,
   le produit de revêtement contenant moins de 0,05% en poids, par rapport au polymère P, de photo-amorceurs et étant **caractérisé par** une concentration en volume de pigment PVK supérieure à 20.

2. Produit de revêtement suivant la revendication 1, dans lequel les monomères A1 sont choisis parmi de l'acrylate d'éthyle, de l'acrylate de n-butyle et de l'acrylate de 2-éthylhexyle et les monomères A2 sont choisis parmi du méthacrylate de méthyle et du méthacrylate de n-butyle.

3. Produit de revêtement suivant la revendication 1, dans lequel le polymère P contient 0,1 à 0,8% en poids d'acide acrylique et/ou d'acide méthacrylique à l'état copolymérisé.

4. Produit de revêtement suivant la revendication 1, dans lequel le polymère P contient à l'état copolymérisé, comme monomère B, 0,2 à 2% en poids d'au moins un monomère D et/ou 0,2 à 4% en poids d'au moins un monomère E.

5. Produit de revêtement suivant l'une des revendications précédentes, dans lequel le composant I peut être obtenu par polymérisation radicalaire en émulsion aqueuse des monomères A à F, en présence d'un ou de plusieurs composés tensioactifs, comprenant au moins un agent émulsionnant anionique et éventuellement un ou plusieurs agents émulsionnants non ioniques.

6. Produit de revêtement suivant la revendication 5, dans lequel le composant I a, après la polymérisation en émulsion, été ajusté à une valeur de pH de 6 à 10 par une base non volatile.

7. Produit de revêtement suivant l'une des revendications précédentes, qui contient moins de 0,1% en poids de constituants organiques volatils (par rapport à la quantité totale du produit de revêtement).

**8.** Produit de revêtement suivant l'une des revendications précédentes, présentant un PVK de l'ordre de 20 à 65, en particulier de 30 à 60.

**9.** Produit de revêtement suivant l'une des revendications précédentes, sous la forme d'une peinture en dispersion pour des applications externes.

**10.** Produit de revêtement suivant l'une des revendications 8 et 9, contenant, comme constituants non volatils,

i) 5 à 40% en poids de composant I,
ii) 10 à 30% en poids de composant II,
iii) 15 à 60% en poids de composant III,
iv) 0,1 à 20% en poids des adjuvants courants pour des produits de revêtement.